# EUROPÄISCHE PATENTANMELDUNG

(11) **EP 1 422 477 A2**
(43) Veröffentlichungstag der Anmeldung: **26.05.2004**
(21) Anmeldenummer: 03017334.8
(22) Anmeldetag: 31.07.2003
(51) Int. Cl.: F23J 13/04

(54) **Kaminrohr mit Längenausdehnungselement**

(30) Priorität: 22.11.2002 DE 10255089
(71) Anmelder: ROBERT BOSCH GMBH, 70442 Stuttgart (DE)
(72) Erfinder: Schubert, Joachim, 73240 Wendlingen (DE); Schmitz, Torsten, 74336 Brackenheim (DE); Seth, Peter, 73779 Deizisau (DE); Ziegler, Rainer, 72224 Ebhausen (DE)

(57) **Zusammenfassung**

Es wird ein Kaminrohr zum abgasseitigen Anschluss mindestens eines Heizgerätes, insbesondere eines Brennwertgerätes vorgeschlagen. Das Kam inrohr weist eine Rohrleitung (11) mit mindestens einem Anschluss-Stück (15, 20) auf, an das ein Abgasrohr (18) eines Heizgerätes (14) anschließbar ist. In die Rohrleitung (11) ist mindestens ein Rohrstück (26) mit einem Längenausdehnungselement (23) integriert.

## Beschreibung

Die Erfindung betrifft ein Kaminrohr zum abgasseitigen Anschluss mindestens eines Heizgerätes, insbesondere eines Brennwertgerätes, nach dem Oberbegriff des Anspruchs 1.

### Stand der Technik

Kaminrohre, an die die Abgasleitungen von Heizgeräten anschließbar sind, ändern auf Grund der unterschiedlichen Temperatur des Abgases ihre Länge. Normalerweise ist die Längenänderung entweder so klein, dass sie nicht ins Gewicht fällt, oder das Kaminrohr ist bei Leitungen mit großen Temperaturausdehnungskoeffizenten so installiert, dass es sich frei bewegen kann, um Längenänderungen auszugleichen. Sind jedoch bei Kaminrohren in Rohrlängsrichtung mehrere Fixierstellen der Rohrleitung unumgänglich, was insbesondere beim Anschluss von mehreren Heizgeräten an ein Kaminrohr bei sogenannter Mehrfachbelegung der Fall ist, muss zwischen zwei Fixierstellen bzw. Geräteanschluss-Stellen eine Längenausdehnung möglich sein.

### Vorteile der Erfindung

Das erfindungsgemäße Kaminrohr mit den kennzeichnenden Merkmalen des Anspruchs 1 hat den Vorteil, dass eine Längenausdehnung der Rohrleitung eines Kaminrohres zwischen zwei Fixierstellen möglicht ist. Damit ist das erfindungsgemäße Kaminrohr besonders geeignet zum Anschluss von mehreren Heizgeräten an ein einziges Kaminrohr.

Besonders vorteilhaft ist es, die Längenausdehnungselemente feststellbar bzw. blockierbar auszuführen. Dadurch ist es möglich, dass beim Einsetzen der Rohrleitung in einen Schacht bzw. Schornstein eine weitgehend exakte Positionierung von Anschluss-Stücken möglich ist. Dabei ist das Längenausdehnungselement in Strömungsrichtung des Abgases unmittelbar unterhalb jeder Fixierstelle in der Rohrleitung angeordnet. Die Feststellung bzw. Blockierung des Längenausdehnungselements bleibt so lange erhalten, bis in den Etagen, in denen nicht sofort bei Installation des Kaminrohres ein Heizgerät installiert wird, sondern erst nachträglich durch Öffnen des Mauerwerks des Schachtes ein Zugang zu einem hinter dem Mauerwerk liegenden, verschlossenen Anschluss-Stück erfolgt. Erst dann wird das sich dort unterhalb des Anschluss-Stücks befindende Längenausdehnungselement von seiner Feststellung bzw. Blockierung gelöst. Zu diesem Zeitpunkt wird auch die Rohrleitung an dieser Stelle im Schacht fixiert. Insofern ist auch erst zu diesem Zeitpunkt die Wirkung der Längenänderung des Rohrstücks notwendig. Zweckmäßig ist ferner die Feststellung bzw. Blockierung des Längenausdehnungselements durch einfache Handgriffe zu entfernen. Dies kann beispielsweise durch Abstandshalter, Klemmbänder oder sonstige Klemmungen erfolgen. Geeignete Längenänderungselemente sind Wellenkompensatoren, wie beispielsweise Wellrohre, oder Gleit- bzw. Schieberohrelemente.

### Zeichnung

Zwei Ausführungsbeispiele der Erfindung sind in der Zeichnung dargestellt und in der nachfolgenden Beschreibung näher erläutert.
- Figur 1: zeigt einen Längsschnitt durch ein Gebäude mit einem eingebauten Kaminrohr,
- Figur 2: ein erstes Ausführungsbeispiel eines Rohrstücks mit einem Längenausdehnungselement und
- Figur 3: ein zweites Ausführungsbeispiel eines Rohrstücks mit einem Längenausdehnungselement.

### Ausführungsbeispiele

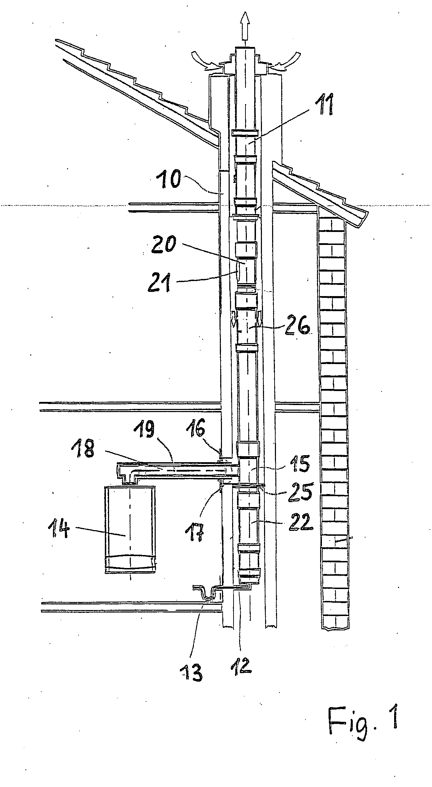

In Figur 1 ist ein Gebäude mit einem Schornstein bzw. Schacht 10 dargestellt, wobei in dem Schacht 10 eine Rohrleitung 11 eines Kaminrohr eingebaut ist. Die Rohrleitung 11 des Kaminrohres ist aus mehreren Rohrstücken zusammengesetzt, wobei die einzelnen Rohrstücke vom Kopf des Schachtes 10 aus vertikal in denselben eingeschoben werden und so das Kaminrohr ergeben. Die Rohrleitung 11 des Kaminrohrs besteht dabei aus einem geeigneten Material, das das im Abgas enthaltene Kondenswasser aufnehmen und ableiten kann. Als geeignete Materialien sind Edelstahl, Kunststoff oder Aluminium bekannt. Zum Ableiten des Kondenswassers ist an der tiefsten Stelle der Rohrleitung 11 eine Abflussleitung 12 mit einem Siphon 13 angebracht, so dass das Kondenswasser in eine nicht dargestellte Abwasserleitung abgeführt werden kann.

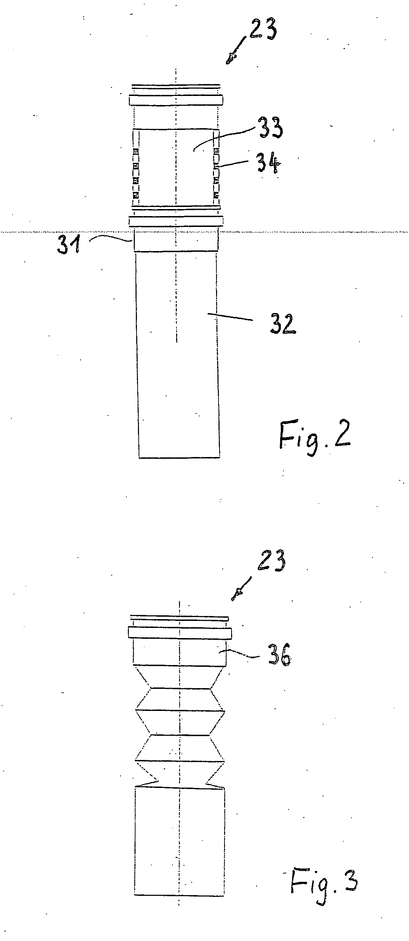

Im unteren Geschoss ist an das Kaminrohr ein Heizgerät 14 angeschlossen. Die Rohrleitung 11 des Kaminrohres weist ein erstes Anschluss-Stück 15 mit einem Anschlussflansch 16 auf. An der Stelle des Anschlussflansches 16 ist im Schacht 10 ein Durchbruch 17 eingebracht, durch den ein Abgasrohr 18 des Heizgerätes 14 geführt und an den Anschlussflansch 16 angeschlossen ist. Im vorliegenden Ausführungsbeispiel ist das Abgasrohr 18 von einem koaxialen Luftzufuhrrohr 19 umgeben, das ebenfalls am Durchbruch 17 an den Schacht 10 angeschlossen ist. Über das Luftzufuhrrohr 19 wird die Verbrennungsluft über den Schacht 10 zum Heizgerät 14 geführt. Das Anschluss-Stück 15 ist mittels eines Befestigungselements 25 im Schacht 10 fixiert. Unterhalb des Anschluss-Stücks 15 ist ein Rohrstück 22 mit einem Längenausdehnungselement 23 gemäß den Figuren 2 oder 3 angeordnet. Das Längenausdehnungselement 23 des Rohrstücks 22 ist in der Einbauposition frei beweglich, so dass eine Längenausdehnung der Rohrleitung des Kaminrohres 11 kompensiert werden kann.

In der darüber liegenden Etage ist gemäß Figur 1 kein Heizgerät an das Kaminrohr 11 angeschlossen. In die Rohrleitung des Kaminrohres 11 ist jedoch für eine spätere Installation eines weiteren Heizgerätes bereits ein weiteres Anschluss-Stück 20 mit einem Verschluss 21 integriert. Das Anschluss-Stück 20 ist dabei auf einer solchen Höhe der Etage positioniert, dass es für einen späteren Anschluss eines Abgasrohres des weiteren Heizgerätes die richtige Anschlussposition hat.

Unterhalb des weiteren Anschluss-Stücks 20 befindet sich ein weiteres Rohrstück 26, das ebenfalls als ein Längenausdehnungselement 23 gemäß den Figuren 2 und 3 ausgebildet ist. In der vorliegenden Situation gemäß Figur 1 ist das Längenausdehnungselement 23 des Rohrstücks 26 blockiert, so dass es keine längenausdehnende Wirkung entfalten kann. Die Blockierung des Längenausdehnungselements 23 wird erst beseitigt, wenn ein weiteres Heizgerät an das weitere Anschluss-Stück 20 angeschlossen wird. Dazu wird die Wand des Schachtes 20 an der Stelle des weiteren Anschluss-Stücks 20 aufgestemmt bzw. geöffnet, so dass ein Zugang zum Verschluss 21 möglich ist. Der Verschluss 21 wird geöffnet und ein entsprechender Anschlussadapter für ein weiteres Abgasrohr des weiteren Heizgerätes in geeigneter Weise angebracht.

Gleichzeitig erfolgt unterhalb des Anschluss-Stücks 20 eine Fixierung der Rohrleitung 11 mittels eines weiteren, nicht dargestellten Befestigungselements. Zweckmäßig ist, dass die Blockierung des Längenausdehnungselements 23 des Rohrstücks 26 nach der Fixierung der Rohrleitung 11 entfernt wird, so dass das Längenausdehnungselement 23 seine Wirkung entfalten kann. Denn mit der Installation des weiteren Heizgerätes ist die Rohrleitung 11 zwischen dem ersten Befestigungselement 25 und dem weiteren, nicht dargestellten Befestigungselement fixiert, so dass auf diese relativ kurze Distanz eine Längenausdehnung der Rohrleitung 11 in diesem Abschnitt mittels des wirksamen Längenausdehnungselements 23 möglich ist.

In den Figur 2 und 3 sind Ausführungsbeispiele des Längenausdehnungselements 23 aufgeführt. Figur 2 zeigt dabei ein Rohranordnung 31 mit einer längsverschiebbaren Muffe 32 und einer feststehenden Muffe 33. Zur Blockierung der längsverschiebbaren Muffe 32 sind am Außenumfang der feststehenden Muffe 33 Abstandshalter 34 angebracht, die eine Verschiebung der längsverschiebbaren Muffe 32 entlang der feststehenden Muffe 33 verhindern. Die Abstandshalter 34 können auch durch eine entsprechende Klemmung bzw. Spannschellen realisiert werden. Nach Entferner der Abstandshalter 34 ist die längsverschiebbare Muffe 32 relativ zur feststehenden Muffe 33 verschiebbar.

Ein weiteres Ausführungsbeispiel für ein Längenausdehnungselement 23 geht aus Figur 3 hervor. Hierbei ist als Längenausdehnungselement 23 ein Wellrohr 36 vorgesehen, dessen Länge in Längsrichtung durch Strecken oder Stauchen variierbar ist. Die Blockierung der Längenausdehnung des Wellrohres 36 ist durch geeignete Abstandshalter oder Formteile möglich.

## Patentansprüche

1. Kaminrohr zum abgasseitigen Anschluss mindestens eines Heizgerätes mit einer Rohrleitung, die mindestens ein Anschluss-Stück aufweist, an das ein Abgasrohr des Heizgerätes anschließbar ist, **dadurch gekennzeichnet, dass** die Rohrleitung (11) mindestens ein Rohrstück (22, 26) mit einem Längenausdehnungselement (23) aufweist.

2. Kaminrohr nach Anspruch 1, **dadurch gekennzeichnet, dass** das Längenausdehnungselement (23) gegen Verkürzung und/oder Verlängerung feststellbar oder blockierbar ist.

3. Kaminrohr nach Anspruch 1, **dadurch gekennzeichnet, dass** das Längenausdehnungselement (23) in Strömungsrichtung des Abgases unterhalb des Anschluss-Stücks (15, 20) angeordnet ist.

4. Kaminrohr nach Anspruch 1, **dadurch gekennzeichnet, dass** das Längenausdehnungselement (23) eine Rohranordnung (31) mit einer feststehenden Muffe (33) und einer längsverschiebbaren Muffe (32) ist.

5. Kaminrohr nach Anspruch 1, **dadurch gekennzeichnet, dass** das Längenausdehnungselement (23) ein Wellrohr (36) ist.
